# EUROPEAN PATENT APPLICATION

(11) **EP 0 937 544 A2**
(43) Date of publication of application: **25.08.1999**
(21) Application number: 99301266.5
(22) Date of filing: 22.02.1999
(51) Int. Cl.: B24D 5/16, B24D 7/16, B24D 18/00

(54) **Surface treatment**

(30) Priority: 21.02.1998 GB 9803604
(71) Applicant: Merit Abrasives Europe Ltd., Glasgow G52 4PP (GB)
(72) Inventor: Smith, Walter William Edgar Anstruther, Neilston G78 3EX (GB)
(74) Representative: Shanks, Andrew

(57) **Abstract**

A method of producing an abrasive treatment disc is provided, whereby the disc is formed from an abrasive material (10) ultrasonically welded to a mounting member (14). The mounting member (14) may be used to attach the disc (10) to a tool for subsequent use.

Also provided is an abrasive treatment disc produced according to an ultrasonic welding method. Woven and nonwoven materials may be used as the abrasive material (10).

## Description

This invention relates to surface treatment, including surface conditioning and grinding, and in particular but not exclusively to surface conditioning discs and abrasive cloth discs.

In a number of industries, high quality metal parts are still finished by hand, using rotary power tools fitted with discs of surface conditioning material and abrasive cloth, typically discs of non-woven and woven material carrying abrasive. The majority of such discs comprise an abrasive disc having a "button" fixed to a rear face, the button including a profile adapted to releasably engage with an appropriate tool fitting. At present, the buttons are secured on the discs using an epoxy glue. One method of producing the discs is as follows: a stainless steel sheet having a series of button-sized holes therein is placed over the rear surface of a sheet of abrasive-carrying material; epoxy glue is then applied to the areas of material below the holes; nylon buttons are then dipped in an agent to soften the nylon; a softened button is placed in each hole; the stainless steel sheet is removed; the sheet of material, with the buttons sitting thereon, is placed in an oven to set the epoxy; the sheets are removed from the oven, and individual discs cut from the sheet. This process is time-consuming, results in a large number of rejects and the machinery traditionally used to cut the discs from the sheet is considered by many to be unacceptably hazardous to operate and is indeed illegal in many jurisdictions.

In addition to this, a number of materials used to make abrasive discs are unsuitable for direct application of epoxy glue. Non-woven materials of large pore size, for example, may be porous enough to allow much of the epoxy to enter the pad, and so be unavailable for gluing. Other materials are incompatible with direct fixing of the button to the pad.

At present this problem is overcome by affixing an abrasive pad to a backing pad, and then attaching a button to the backing pad. This process obviously requires more steps than direct fixing of the button, and so is more time-consuming and expensive.

An alternative solution presently in use is to mechanically fix a button to the pad, using for example a nut and bolt arrangement. This has the disadvantage of compressing the abrasive pad, which tends to cause a loss of abrasive quality.

It is among the objectives of the present invention to provide a method of producing a surface treatment disc which obviates or mitigates these disadvantages.

According to the present invention there is provided a method of producing a surface treatment disc comprising a disc of material carrying an abrasive and a mounting member fixed to the rear face thereof to facilitate mounting of the disc on a tool, the method comprising:
providing a disc of material carrying an abrasive; providing a mounting member;
locating the mounting member on a rear face of the disc; and
exposing the mounting member and disc to high frequency energy to weld the member to the disc.

Preferably, the high frequency energy is high frequency sonic energy, at a frequency in excess of 10 kHz, preferably in excess of 15 kHz, and most preferably in the region of 20 kHz.

According to another aspect of the present invention there is provided a surface treatment disc comprising a disc of material carrying an abrasive and a mounting member fixed to a rear face of the disc and comprising means for facilitating mounting the disc to a tool, the mounting member being welded to the disc.

It has been found that the present invention allows more reliable and economical production of surface treatment discs such as surface conditioning discs and abrasive cloth discs. The abrasive material-carrying discs and the mounting members may be readily and efficiently manufactured using automated production processes, and the task of welding the mounting members on the discs may be automated or carried out by unskilled personnel.

The abrasive-carrying discs will typically be circular and formed of woven or non-woven material carrying an abrasive material on a front face thereof, although other materials, compositions, constructions or shapes may be utilised: for example star-shaped or polygonal discs may be utilised if desired.

The mounting members may take any suitable form, and will typically be circular with a central mounting profile such as a threaded post, a threaded recess or mounting fingers, that is a "roll-on", "turn-on" or "snap-on" fitting. The mounting profile of the mounting members may conveniently be designed to fix to standard hand tools, so enabling the user to rapidly and easily interchange treatment discs so as to use the disc most suitable for the work.

Preferably, at least the abutting faces of the abrasive-carrying discs and the mounting material are of compatible material, it having been found that bonding is facilitated by using materials which behave in a similar manner on heating, and in particular materials having similar softening or melting temperatures, for example a mounting member of nylon 66 may be welded to a disc of nylon scrim with melting occurring both in the mounting member and disc. Nylon 66 mounting members may also be welded to discs of other polyamides or polyesters. If necessary, a disc of material or mounting member which does not lend itself to bonding may be provided with an appropriate coating or layer of a more suitable material, for example a polyester backed cloth disc may be welded to a nylon mounting member. Preferably, the melting temperatures of the materials are within a 100°C range.

The compatibility of certain pairs of materials may be optimised by a variation in the conditions of the process used to produce the surface treatment disc. For example, variations may be made in the duration of the exposure of the mounting member and disc to high frequency energy; the frequency of the energy applied; the power of the energy applied; the point of the process at which onset of the application of the energy occurs; or in any pressure which may be applied to the disc and the mounting member during the manufacturing process; among other conditions. The precise conditions under which two materials will optimally bond may be determined by simple experimental trials, and is not a matter of undue burden to the experimenter.

Preferably also, pressure is applied to the mounting member and abrasive material-carrying disc simultaneously with exposure to the high frequency energy. The pressure facilitates formation of a secure bond and minimises the effects of high spots on one or both faces, which may otherwise lead to an undesirable concentration of energy and damage to one or both of the disc and mounting member, typically in the form of "burn-through" of the mounting member.

The effects of high spots may further be mitigated by providing raised areas on one or both of the abutting surfaces, most preferably on the surface of the mounting member. The raised areas may take the form of lines or ribs, and most preferably one or more raised circular ribs. It has been found that, when using a mounting member provided with such circular ribs, bonding tends to occur at a number of circumferentially spaced locations on the ribs. The raised areas may be formed by pressing or moulding.

Alternatively, in a preferred embodiment, such ribs are omitted, as their provision increases the cost of production of the mounting member. It has been found that where there is a problem with high spots, the occurrence of burn through may be reduced by slightly increasing the thickness of the mounting member.

These and other aspects of the present invention will now be described, by way of example, with reference to the accompanying drawings, in which:
Figure 1 is a perspective view of a disc of material carrying an abrasive and a mounting member of a surface treatment disc in accordance with a preferred embodiment of the present invention;
Figure 2 is a view of the underside of the mounting member of Figure 1;
Figure 3 is a view of the underside of a mounting member in accordance with an alternative embodiment of the present invention; and
Figure 4 is a diagrammatic view of a step in the operation of welding the mounting member to the abrasive material-carrying disc of Figure 1.

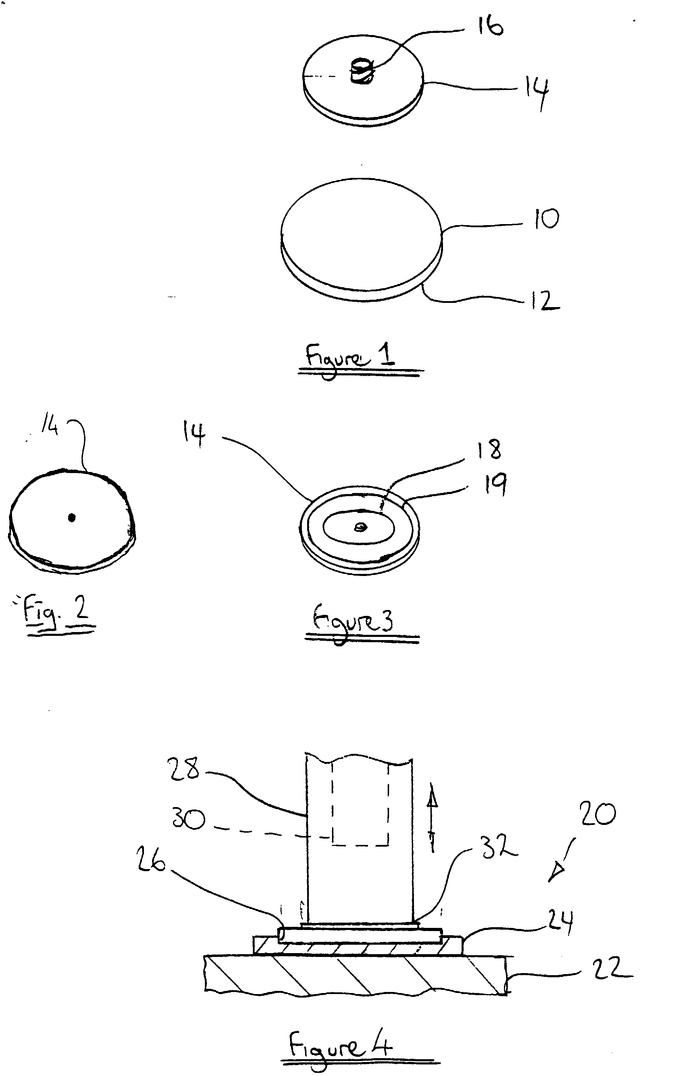

Reference is first made to Figure 1 of the drawings, which illustrates the elements of a surface treatment disc in the form of a surface conditioning disc in accordance with a preferred embodiment of the present invention, that is a disc of material 10 carrying an abrasive 12 on a front face thereof, and a mounting member in the form of a button 14 for fixing to a rear face of the disc 10. In this example the disc 10 is formed of nylon scrim and the button 14 is formed of nylon 66, the button having a "roll-on" post 16 extending from its rear face for releasably engaging with a suitable rotary power tool.

The front face of the button 14 is illustrated in Figure 2 of the drawings, and it will be noted that the button face is flat. An alternative button 14 is shown in Figure 3, where the button face can be seen to define two raised circumferential ribs 18, 19.

To fix the button 14 to the disc 10, the button 14 is placed centrally on the rear face of the disc 10 and the button 14 then ultrasonically welded to the rear face of the disc 10.

Figure 4 of the drawings is a diagrammatic illustration of apparatus 20 suitable for use in welding the button 14 to the disc 10. In particular, the apparatus 20 comprises a rotating table 10 carrying a number of circumferentially spaced plates 24 (only one shown), each plate defining a circular recess 26. A disc 10 is placed in a recess 26 at an operator accessible location and a button 14 then placed centrally on the rear face of the disc 10. The table 22 indexes to a button centring station (not shown), and then indexes to a welding station, where an ultrasonic welding head 28, including a sonic emitter 30, or sonotrode, spaced from the head end face 32, is lowered to engage the rear of the button 14, and ultrasonic energy is emitted from the head 28 to melt one or both of the abutting surfaces of the button 14 and disc 10, to secure the button 14 on the disc 10.

In an alternative embodiment of the apparatus 20 illustrated in Figure 4, the disc 10 is placed in the recess 26 as before, while a button 14 is placed on a guide rail. A mechanical arm draws the button 14 toward the ultrasonic welding head 28, which head further comprises an air suction device which lifts the button 14 to the head 28, while automatically ensuring the button 14 is aligned correctly with respect to the disc 10. The head 28 then lowers to engage the button 14 with the disc 10, and the ultrasonic welding process is carried out as before.

Using a button 14 as described in Figure 3 above, it has been found that welding tends to occur at circumferentially spaced locations around the button ribs 18, 19.

The process described above may be used on a wide range of materials and types of disc. The optimal conditions necessary to produce a firm weld vary according to the materials used, and may best be determined by a matter of experiment. Indeed, it has been found that the optimal welding parameters vary even between different batches of the same materials.

By way of example, certain of the materials successfully welded, and the conditions used in the process are set out below.

### EXAMPLE

Typical conditions suitable for ultrasonically welding a nylon 66 button to a disc made from non woven nylon scrim impregnated with abrasive grain are as follows.

A 3000 watts output ultrasonic welder emitting sonic energy at a frequency of 20kHz was used. The distance between the sonotrode and the welding head end face was 33.66mm. Ultrasonic energy was initially applied 6mm before contact was made between the head and the button to be welded. A pressure of 1.1 bar was applied to the button and disc, while ultrasonic energy was applied for 0.8 seconds after contact. The pressure was maintained for a further 0.5 seconds after the ultrasonic energy application ceased.

This produced a secure weld, and subsequent testing demonstrated that the bond between the button and disc was at least as secure as a bond formed by conventional means.

Each of these parameters may be varied to find the most suitable conditions for welding other materials.

It will be clear to those of skill in the art that the above-described method of producing a surface treatment disc is straightforward and may be carried out far more easily and efficiently than the conventional method of fixing the button to the disc of abrasive carrying material using an epoxy glue. As the abrasive-carrying material may be cut before the buttons are applied, the discs of material may be cut more accurately, reducing waste by approximately 20%. Also, the button is fixed without the use of solvents and the like, thus simplifying health and safety requirements and providing a safer environment for production personnel. The absence of a layer of solidified epoxy between the button and the abrasive-carrying material also provides surface treatment discs in accordance with embodiments of the invention which are more flexible than conventional discs.

It will be further apparent to those of skill in the art that the above-described embodiments are merely exemplary of the present invention, and that various modifications and improvements may be made thereto without departing from the scope of the invention: in another embodiment, a nylon button has been ultrasonically welded to the rear face of a polyester-backed abrasive cloth disc.

## Claims

1. A method of producing a surface treatment disc comprising a disc of material carrying an abrasive and a mounting member fixed to the rear face thereof to facilitate mounting of the disc on a tool, the method comprising:
providing a disc of material carrying an abrasive;
providing a mounting member;
locating the mounting member on a rear face of the disc; and
exposing the mounting member and disc to high frequency energy to weld the member to the disc.

2. The method of claim 1, wherein at least the materials forming the abutting faces of the adhesive material-carrying disc and the mounting member are selected to have similar melting temperatures.

3. The method of claims 1 or 2 wherein the mounting member is of nylon and is welded to a disc of nylon scrim.

4. The method of claims 1 or 2 wherein the mounting member is of nylon and is welded to a disc of polyester backed abrasive cloth.

5. The method of any of claims 1 to 4, wherein ultrasonic welding is utilised to fix the mounting member to the disc.

6. The method of any of claims 1 to 5, wherein pressure is applied to the mounting member and disc simultaneously with exposure to the high frequency energy.

7. The method of claim 6, wherein the exposure to high frequency energy commences prior to the application of pressure to the mounting member and disc.

8. The method of claim 6 wherein the application of pressure continues after the exposure to the high frequency energy has ceased.

9. The method of claim 7 wherein the application of pressure continues after the exposure to the high frequency energy has ceased.

10. The method of any preceding claim, further comprising providing raised areas on one or both of the abutting surfaces of the mounting member and the disc.

11. A surface treatment disc comprising a disc of non-metallic material carrying an abrasive and a non-metallic mounting member fixed to a rear face of the disc and comprising means for facilitating mounting the disc to a tool, the mounting member being welded to the abrasive material-carrying disc.

12. The disc of claim 11, wherein the disc is a surface conditioning disc.

13. The disc of claim 11 or 12, wherein the disc is of a non-woven material carrying an abrasive material on at least a front face thereof.

14. The disc of claims 11 to 13, wherein the disc is an abrasive cloth disc.

15. The disc of any of claims 11 to 14, wherein the disc is of woven material carrying an abrasive material on at least a front face thereof.

16. The disc of any of claims 11 to 15 wherein the mounting member is circular with a central mounting profile.
